# EUROPEAN PATENT APPLICATION

(11) **EP 0 639 439 A2**
(43) Date of publication of application: **22.02.1995**
(21) Application number: 94305438.7
(22) Date of filing: 22.07.1994
(51) Int. Cl.: B29C 33/56, B29C 33/02, B29C 33/40, B29C 33/38

(54) **Method and apparatus for molding thermoplastic materials employing molds with void free insulating layer**

(30) Priority: 17.08.1993 US 107484
(71) Applicant: GENERAL ELECTRIC COMPANY, Schenectady, NY 12345 (US)
(72) Inventor: Baumgartner, Charles Edward, Niskayona, New York 12309 (US); Hamly, Katherine Dana, East Greenbush, NY 12061-1713 (US); Niemeyer, Matthew Frank, North Chatham, New York 12132 (US)
(74) Representative: Pratt, Richard Wilson

(57) **Abstract**

A method of making a mold (10) is disclosed in which the internal heating channels (14) associated with the mold are used to establish a conductive thermal gradient (ΔT). A coating (16) is sprayed onto the mold which is heated internally so that the volatiles in the coating are driven off from within the coating (16) to the free surface (28) thereof, whereby a void free coating is formed on the mold. The mold structure, methods of molding and articles made thereby are also disclosed.

## Description

### BACKGROUND OF THE INVENTION

The present invention relates generally to molding thermoplastic materials and more particularly to insulated molds formed by a process resulting in a void free insulating layer having improved thermal and physical properties.

Molding of thermoplastic resins is a promising technique for producing relatively thin, large areas and strong plastic parts such as panels for use in automobiles or appliances. Depending on specific requirements, such plastic parts can be made by any of a number of molding processes such as blow molding, injection molding, compression molding and injection compression molding. Blow molding involves the extrusion of a molten tube of resin called a parison into a mold. The mold closes around the parison, pinching the bottom of the parison closed. A gas such as air is then introduced causing the tube to expand against the cool surfaces of the mold. When the parison comes into contact with the cool mold surface, the plastic at the surface quickly freezes. This results in surface imperfections such as die lines, fold lines, pores and voids.

Injection molding involves injecting molten thermoplastic resin into a mold apparatus. Molds for injection molding of thermoplastic resin are usually made from metal material such as iron, steel, stainless steel, aluminum alloy or brass. Such materials are advantageous in that they have high thermal conductivity and thus allow the melt of thermoplastic resin to cool rapidly and shorten the molding cycle surface, resulting in a thin solid layer. Quick quenching of the melt at the mold surface creates several problems, particularly when molding resins which contain large amounts of fillers in the form of fibers and powders. The freezing of these materials at the mold surface creates a rough unfinished surface with exposed fillers, voids and porosity.

Processing difficulties arise when producing thin, large parts by injection molding. The quick solidification of the melt combined with limited flowability of the materials makes it difficult to achieve melt flow over a large area. The use of multiple gates for large and/or complex mold cavities produces weld lines, which are unsightly and weak. Another important consideration in injection molding of high quality parts is the residual stresses in the molded part which can result in dimensional instability over the lifetime of the part. Non-uniform residual stresses also produce differential refractive indices. Dimensional stability and uniformity of refractive indices are essential for high quality parts.

Compression molding processing of glass reinforced thermoplastic sheets begin with heating the composite blanks. The material is heated above its melting point or if an amorphous material at least substantially above its glass transition temperature. When the blanks are heated, they expand (loft) due to the recoil forces within the fibers. The hot blanks are then pressed between cool mold surfaces which are below the melting point or glass transition temperature (typically 175°-250°F). Contact with the cool mold surfaces results in frozen resin on the surface of the blank. This creates unfilled areas in the form of exposed fibers and surface porosity. Since the resin at the cold surface is frozen and does not flow, rough boundaries between the charged and newly formed areas are produced.

In injection compression molding which is a combined process, a hot thermoplastic melt is injected into a mold cavity. The parting line of the mold is positioned open or allowed to be forced open by the injected melt typically 0.05'' to 0.3'' inches. The clamping force is increased initiating the compression stroke of the mold forcing the melt to fill the cavity. In many instances the velocity of the melt front through the cavity changes as the injection stroke stops and the compression stroke begins. This distinct change in melt front velocity is often characterized by a stall followed by a surge in the melt front.

The melt begins to quench on the cavity walls as it is injected into the mold. As the melt front stalls, at the completion of injection, and then surges forward, upon the initiation of compression, a blemish, sometimes referred to as a halo, may be produced in the surface of the molded article. The blemish is the result of differential cooling and shear stress which occurs in the injection compression process as a result of the melt front velocity change.

During conventional molding of plastics, the hot plastic increases rapidly in viscosity both as the melt front cools and as it contacts the cooler mold surface resulting in a skin possessing a stress and orientation different from the bulk of the molded part. Recent improvements in the molding of parts from thermoplastic materials include providing a multilayer composite mold structure in which a thermally conductive core, e.g., a metal, is covered with an insulating layer, e.g., a thermally cured polymer, over which a hard skin metal layer is formed for providing improved surface characteristics to the molded plastic parts. The thermal insulator on the mold surface momentarily retards the rate at which the plastic cools upon mold contact thereby allowing the skin to be reheated and to reflow by heat derived from the remaining melt. The reheating reduces or eliminates the skin effects, allowing the molded plastic surface to more accurately replicate the mold surface and to minimize surface stresses. The technique not only improves surface aesthetics but also reduces molding pressure, due to the reduced interfacial viscosity at the mold surface, as well as the potential for decreasing molding cycle time by allowing the mold to be operated at a cooler temperature. The purpose of the insulating layer is thus to slow the cooling of the thermoplastic material sufficiently so that it remains plastic at the mold surface for a time sufficient for voids, dye lines, folds and other surface defects to be removed as the plastic material cools. Otherwise, the plastic material which comes in contact with the relatively cool surface of the mold core quickly freezes and surface defects are frozen in place at the molded component surface.

There have recently been disclosed such multilayer molds. The insulating layer is fabricated of material having low thermal conductivity, thus slowing the cooling of the molten resin, and also having good resistance to high temperature degradation, permitting use in a mold maintained at high temperatures. Said layer may be made of a resin such as polyimide, polyamideimide, polyethersulfone or polyetherketone, typically applied in uncured form (e.g., as a polyamic acid in the case of a polyimide or polyamideimide) and subsequently cured. Cured resins in a solvent carrier may also be employed.

One important requisite for the use of molded plastic parts in large, exterior panel applications is a finished surface quality. The surface of molded plastic parts should be as finished as that of current exterior parts made from sheet metal. Improved surface quality of molded plastic parts has been achieved by means of molds in which a polymeric insulating layer is disposed on the mold core and a durable thin skin metal layer is disposed on the insulating layer. Due to the insulation, the skin layer retains heat during the molding operation, thereby avoiding the surface irregularities created by rapid surface cooling. Thus, these devices provide a finished surface while maintaining a relatively short cycle time.

Exemplary insulated molds have an insulating layer of about 0.01 inch and a corrosion-resistant nickel outer skin. The application of the insulating layer involves spraying the polymer in a solvent solution and drying. This is repeated until the final desired coating thickness has been achieved after which a layer of Ni is electro deposited or applied electrolessly.

Particularly advantageous multilayer mold structures have been produced in which the mold is first coated with a thermal insulator, such as polyamideimide, and then overcoated with one or more layers of an abrasion-resistant metal such as electroless nickel. In some instances the outer layer of the polymer has a porous primer layer formed of a matrix of nickel particles suspended in the polymer to promote durability of the mold and to promote adhesion of the nickel skin layer.

Conventionally, molds are sprayed with a solution of cured material dissolved in a solvent or uncured polyamic acid. The mold is heated in an oven to drive off volatiles and to pre-cure the uncured materials. The oven method has a number of disadvantages as herein after discussed.

Addition and condensation reactions involved with the chemistry of polyimide materials make it difficult to build relatively thick coatings of these materials quickly and efficiently on the mold core. Multiple coats are required to effectively build coatings of 1 mil. or greater. Many of the polyimide solutions are of relatively low solids content, i.e., 5-7% solids in solution. Thermal cycling is thus required to remove sufficient amounts of the solvent vehicle prior to subsequent coats and to initiate and drive the imidization reaction to completion while driving off any volatiles (e.g., H₂O) formed during the reaction. When coating large tools with the current oven method, the amount of energy necessary to raise the surface temperature to sufficient levels is quite high, thus the time required to heat the mold during each cycle is relatively long. Further, it is not possible to simply raise the mold temperature over time by external heating methods. Volatiles eventually become trapped in the coating, as discussed below.

Currently, the heating of large, massive or heavy objects (e.g., over 100 lbs.) is achieved by large circulating air ovens. The heating relies on low rate convective heat transfer between heated air and a steel or aluminum tool surface or core. The time required to heat the object to be coated is large arising from the high heat capacity of the metal mold. Further, because polyimides have a low thermal conductivity they are useful for mold coatings. However, as the coating layer thickness increases an increasingly effective thermal insulating layer is built up on the tool surface. This decreases the efficiency of heating and increases the cycle time. Superheated air, i.e., air at temperatures which are higher than the drying or cure temperature of the coating materials, cannot be utilized to accelerate the heating of the tool. An overshoot in the temperature can cause premature imidization of the coating during drying or thermal degradation of the polyimide, or both. The mold coating shrinks and cracks. Premature imidization can cause a skin to form on the surface exposed to superheated air trapping volatiles in the layer. These volatiles result in imperfections in the mold surface during the initial heating step and during final cure at elevated temperatures. Also, prior art methods for coating large, massive molds seem to be limited to a coating thickness of about 10-15 mils.

### SUMMARY OF THE INVENTION

The present invention is based upon the discovery that the mold core carrying a heat curable mold coating can be heated conductively to control the mold temperatures during curing. In an exemplary embodiment, built-in heating and cooling lines in conjunction with an oil heating unit which are usually employed during the molding operations may be employed to effect conductive heating of the core. The time required to coat a massive tool (e.g., > 100 lbs.) with a thermally activated coating, by heating the mold core conductively with an internal heating systems is greatly reduced. Heat supplied to the coating causes initiation of the thermal cure of the coating at the interface between the mold core or most recently cured coating layer and the newly deposited coating solution, whereby the cure occurs from the inside out.

Thermal curing of the coatings occurs without premature stress formation on the free surface prior to full cure or full removal of solvent. Overall lower levels of volatiles are trapped. Thus, high molding temperatures are achievable. The invention is particularly advantageous for molds greater than 100 lbs.

In a particular embodiment the invention comprises a mold for molding thermoplastic materials comprising a substrate having high thermal conductivity formed with a plurality of fluid passages disposed adjacent the usable surface of the mold; and a layer of temperature-resistant material having low thermal conductivity and reduced levels of trapped volatiles deposed on the tool surface.

According to the invention, a supply of heated fluid is conveyed through the fluid passages in channels in conductive heat exchange relation with the core. A layer of the temperature-resistant material is deposited as a heat curable solution or suspension on the tool surface, and the heated fluid transfers heat to the core, which activates the solution proximate the surface of the tool. As a result, an initial cure occurs internally of the layer towards the free surface thereof, driving volatiles from the layer without causing void formation therein or damage to the free surface of the layer during the curing operation as the volatiles evolve. Other methods for heating the mold internally are contemplated.

The invention is also directed to a method for molding articles from thermoplastic materials comprising charging a plastic into a mold of the type described above. Retaining the article within mold for a time sufficient to cool below the glass transition temperature of the plastic and ejecting the cooled article.

### BRIEF DESCRIPTION OF THE DRAWINGS

The subject matter which is regarded as the invention is particularly pointed out and distinctly claimed in the concluding portion of the specification. The invention, however, both as to organization and method of practice, together with further objects and advantages thereof may best be understood by reference to the following description taken in conjunction with the accompanying drawing figures in which:
Fig. 1 is a fragmentary side sectional elevation of a coated mold core in an injection compression molding apparatus;
Fig. 2 is a fragmentary side elevation of a coated mold core coupled to a heating apparatus;
Fig. 3 is an enlarged schematic fragmentary view of the mold core and the insulating coating during the cure process; and
Fig. 4 is a schematic illustration of a spray deposition set up for examining system variables;
Fig. 5. is a graphical representation of a two stage heating cycle;
Fig. 6 is a graphical representation of weight % volatiles and temperature versus time;
Fig. 7 is a graphical representation of the weight % volatiles remaining in the coating versus time at 450°F in air;
Fig. 8 is a graphical representation similar to Fig. 7 for various insulator thicknesses;
Fig. 9 illustrates a preferred curing cycle;
Fig. 10 is a graphical representation of weight loss in air at various temperatures versus time; and
Fig. 11 is a comparative plot graphically showing the time temperature relationship of a thermoplastic material relative to the glass transition temperature T_{g} in a conventional mold and in a mold according to the present invention.

### DESCRIPTION OF THE INVENTION

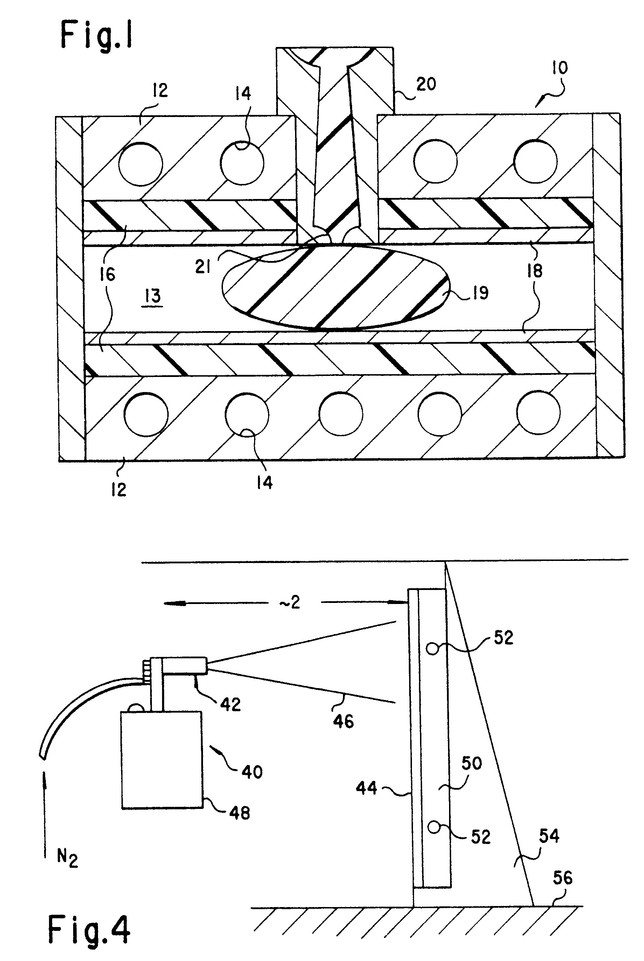

An exemplary injection compression molding apparatus 10 according to the invention is illustrated in Fig. 1, which includes a pair of relatively moveable, mold core or substrate members 12 disposed in confronting relationship forming mold cavity 13. The cores 12 have fluid-carrying passages or cooling lines 14 formed therein. An insulating layer 16 having a metal or durable outer skin layer 18 is disposed on the insulating layer 16. Molten thermoplastic material or resin 19 is injected into the cavity 13 via a sprue 20 and a gate 21. Thereafter the mold core 12 may be moved towards each other to further compress the melt.

In the embodiment of Fig. 1, the insulation layer 16 may be made of epoxy, polytetrafluoroethylene, polysulfone, polyethersulfone, polyamides, polyamideimides, polyimides, with or without fillers, thermoplastics or thermoset plastics. The insulation layer 16 preferably may have a thickness in the range of about .1-15 mils. The insulation layer 16 may be formed by a variety of methods such as spraying, dipping, brushing or casting. In a preferred embodiment described in detail herein, the insulation layer is formed by spraying followed by a heating step.

The skin 18 may be one or more layers of metal deposited by electroless deposition, electro-deposition, chemical deposition or spraying. The skin 18 may have a thickness in the range of 0.1-15 mils. The metal layer 18 in a preferred embodiment may be a multilayer structure including a top layer of nickel to withstand the abrasion caused by the flowing melt under pressure.

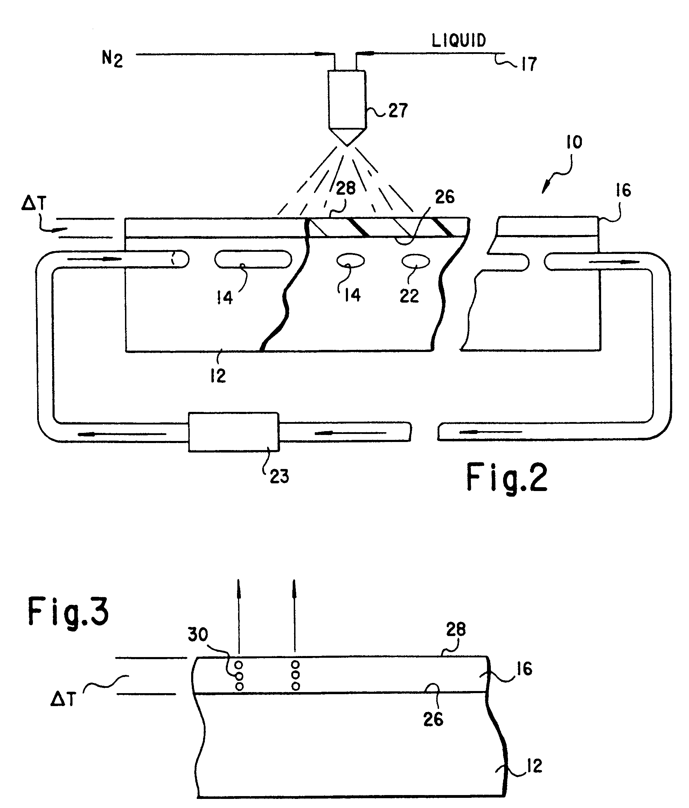

Apparatus for coating the core 12 is illustrated in Fig. 2. The core 12 comprises a thermally conductive material such as aluminum or steel. The cooling lines 14, such as copper pipes, are provided in the core 12 for receiving a cooling fluid to reduce the cycle time during normal molding operations (Fig. 1). In accordance with the present invention, however, as shown in Fig. 2, the cooling lines 14 are employed to carry a working fluid 22 (e.g., oil) through a fluid heater 23 for heating the oil and hence the mold core 22 during the deposition step, as hereinafter described. A supply of insulation material in liquid form 17 fed by a source of pressurized gas (e.g., N₂) is applied onto the surface 26 of core 12 by spray apparatus 27.

The insulating layer 16 may be formed of a variety of materials. Particularly useful materials are polyimides or polyamideimides capable of being sprayed and condensation-cured thereon. Exemplary materials include a polyimide resin available from Ethyl Corporation under the trademark EYMYD and a polyamideimide available from Amoco under the trademark TORLON.

The insulator must meet many requirements such as: constant use temperature >230° (450°F) without creep or degradation; thermal conductivity less than the melt; sprayable to a uniform thickness of >0.010±0.0005 inches; crack and defect free to prevent deformation during molding; low enough internal stresses to avoid delamination during curing and molding; high adhesion to mold surface; and commercial availability at a "reasonable" cost.

A useful material is sold by the Whitford Corp. as a high viscosity varnish containing 25 wt% resin, approximately 50% of which is in amic acid form dissolved in N-methyl-2-pyrrolidone (NMP). The generalized structure of the amic acid and amide-imide form is as follows:

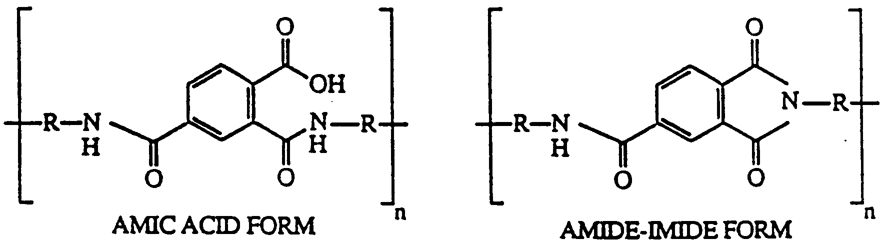

For spray applications, the varnish is diluted to an appropriate viscosity using a two-component solvent system comprised of methyl ethyl ketone (MEK), 54 wt% (boiling point 175°F) and (NMP) 46 wt% (boiling point 400°F). NMP is a solvent for the polyamide-imide and MEK is used to dilute the solution. Rational for the selection of a two-component solvent will be given later. An inorganic filler, e.g., barium sulfate, may be added at a 30% by volume level to the resin during compounding to reduce shrinkage and hence stress in the cured insulator. The barium sulfate is in the form of fine agglomerated particulates with agglomerate size varying from one to ten microns. The two solvents and filler may be compounded with the varnish to form a sprayable solution such as liquid 17 containing 6 wt% resin.

In accordance with the general principle of the invention, the liquid solution 17 is sprayed onto the surface 26 of the core 12, which is maintained at a temperature (e.g., 150°F) just below the boiling point of the low boiling point material (i.e., MEK). This allows the MEK to volatilize quickly, to thereby thicken the coating and prevent running. The spray coating is about 1-2 mils. thick.

The temperature of the mold core 12 is thereafter increased to just below the boiling point (approximately 275-350°F) of the high boiling point material to drive off the NMP. The temperature is maintained for at least about 30 minutes.

Thereafter, the temperature of the mold core 12 is reduced to about 150°F and the spray and volatilization cycle is repeated a number of times until the desired coating thickness has been achieved.

The temperature of the mold core 12 is then brought up to 500-600°F, depending upon the material, for about 2 to 12 hours to cause final curing of the coating. In the exemplary embodiment, when TORLON is used, the final cure temperature is between 500-525°F for 10 hours. The final cure cycle may be achieved in a convection oven or by surrounding the mold with a suitable insulator or other conventional means.

As a result of the process hereinabove described, and as shown in Fig. 3, the volatile materials 30 used to dilute the uncured resin which allow spray coating are driven out of the uncured polymer material forming the insulation layer 16 in a controlled manner from the mold surface 26 outwardly towards the free surface 28 of layer 16. Accordingly, reduced amounts of volatiles are retained in the coating material during the curing steps, and imperfections are thus avoided.

A distinct advantage of the present invention is that a majority of molding tools have the cooling channels 14 built in just below the surface 26 of the mold 10, as illustrated in the drawing. With such equipment, thermal cycling can be controlled more precisely, plus heating rates and efficiency can be improved over conventional methods. Further, as shown in Fig. 3, a thermal gradient ΔT can be established across the coating 16 from the interface at the mold surface 26 to free surface 28. The core surface 26 is at an elevated temperature compared to the free surface 28 of the coating 16 due to its proximity to the heating channels 14 and due to the insulating properties of the layer 16. This causes the volatiles 30 to be driven off from the inside of the coating 16 first. The result of driving off the volatile byproducts of the imidization reaction from the inner surface 26 outward avoids the problem of skin formation on the free surface 28 of the coating 16, as can occur with conventional heating methods. Skin formation results in a barrier to escaping volatiles 30 whereby voids of trapped gases are formed in the coating. These trapped gases can form defects in the surface layer of the coating, which act as initiation sites for failure.

In addition to the foregoing, the present invention allows for the deposition of thicker insulating coatings on mold cores. Conventional coatings are generally limited to about 10 mils in thickness. Thicker coatings are desirable as they retain more heat. However, it has been found that coatings of greater thickness blister during the final cure step. The present invention allows for deposit of coatings of substantially greater than 10 mils without blistering.

Also, the present invention allows for improved cycle times over the conventional oven coating methods where coatings are deposited and partially cured in an oven in 1-2 mil layers until reaching the desired thickness up to 10 mils. Each conventional cycle could take about 8 hours for a mold weighing about 400 lbs. The present invention using the internally heated core method reduces the time per cycle by about two-thirds saving about 5 hours. The present invention is especially helpful for coating large molding cores where thermal cycling is especially weight dependent.

The present invention is directed to a method for forming an insulating coating having reduced volatiles on a mold core by depositing a thermally curable coating material on the core and curing the coating by conductively heating the mold core near the mold surface to drive off volatile products evolved during the curing step.

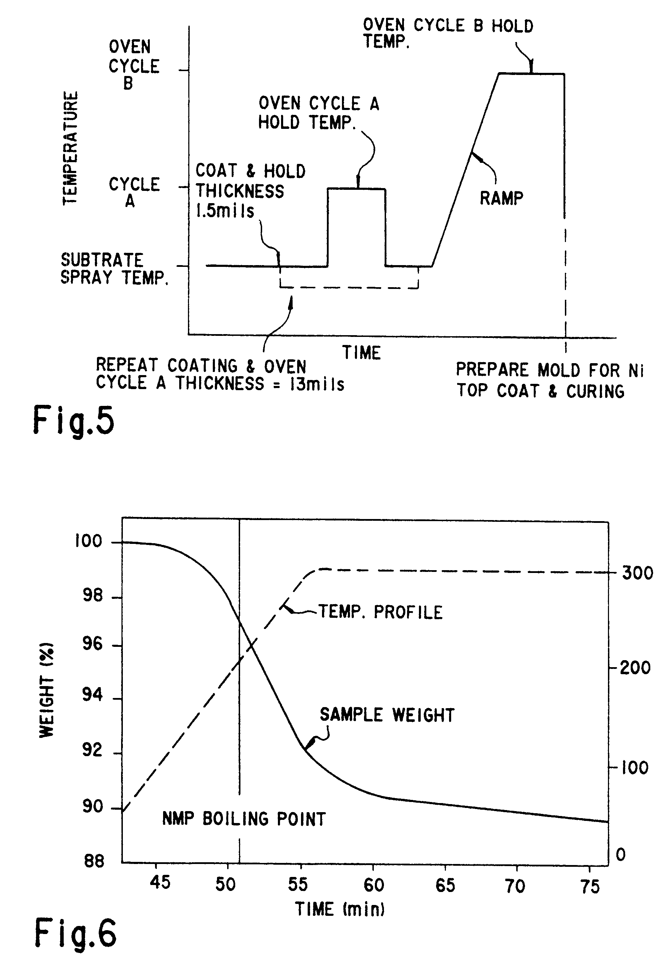

Experiments were performed to spray coat substrates followed by oven cure according to the prior art and internal heat cure according to the invention. In these experiments, coatings were deposited on a vertical substrate by spray deposition. The spray equipment consisted of a spray gun, bottled N₂, sample coupons, a sample heater and a vertical sample support (Fig. 4). A Binks spray gun 40 model 2001 was equipped with a fluid valve 42 so the resin flow could be controlled. Also, the spray width from the gun was variable from a circle pattern to a narrow ellipse. In general, the spray gun was located two feet from the substrate 44. The resin 46 contained suspended BaSO₄ particles, it was then agitated during the coating process. A one quart Agit-Cup vessel 48 model 82-700 was used to maintain the suspension. The nitrogen supply tank was equipped with a regulator to control nitrogen pressure going to the spray gun. The nitrogen supply was typically regulated at 30 to 40 psi. The sample substrates 44, 1/8'' x 4'' x 8'' stainless steel cleaned and degreased, were mounted on a sample heater 50 in the form of a copper block with two resistance heaters 52 imbedded in the block. These units provided continuous heating of the samples which simulated the larger thermal mass of a mold. The sample support was an aluminum rack 54 supported by a base 56. The support was designed to hold the samples and heater in a nearly vertical position, representing the worst case geometry of vertical walls in a mold.

The oven (not shown) used to cycle the samples was a Blue M mechanical convection horizontal airflow with MIC-6000 microprocessor based controller with a uniformity of ±1% of the set point.

The experimental design explored the impact of application and cure variables on final coating quality. Substrate temperatures, oven temperatures, coated layer thickness, heat up rate and final cure temperatures were examined.

The substrates 44 were laid against the copper heating unit 50 and allowed to heat up to the spray temperature. The spray temperature refers to the substrate temperature during coating, typically 150°F. During all spraying, the resin in the gun 40 was at room temperature. The spray gun 40 was oriented two feet from the substrate and normal to the substrate surface. Each layer or pass was applied by spraying the resin on the sample in sweeping motion with the gun always normal to the surface of the sample. The thickness of the layer increases as the gun moves back and forth across the sample. Typically eight sweeps across the surface is sufficient to build a thickness of 0.0015 inches. The coating was heated through a first heating cycle, cooled to the spray temperature and another layer was applied. This process was repeated until the final thickness of 0.013 inches was achieved. The coating was then processed through a second higher heating cycle prior to a final high temperature cure. In the second cycle, the sample is heated to a high temperature for solvent removal and partial curing. This temperature was typically around 450°F.

The volatiles content was found by studying uncured samples in a Thermal Gravimetric Analysis (TGA). Samples of cured insulation material weighing 10 to 50 mg were collected by scraping them from the stainless steel substrate. The samples were placed in a small crucible which was in turn placed in a Mettler TG 50 thermobalance. A Mettler TC 10A processor was programmed for a heat up rate of 10°C per minute from 50°C to 300°C followed by a 20 minute hold at 300°C. This analysis provided information on the weight loss and the temperature at which the loss occurs. The thermal mass of molds larger than for. example 100 pounds, can correlate to many oven hours during the volatilization cycle.

The oil heating method of the invention replaces the oven heating method. As hot oil is pumped through the internal cooling channels of the mold, (the heat transfer from the oil to the steel is significantly greater than from air) the mold heats up faster using hot oil. After the mold was coated to the required thickness and cooled to room temperature, the coated surface was covered with. a plastic sheet to prevent contamination during cleaning of the channels. The oil lines were disconnected and the remaining oil in the mold was flushed out using compressed air. Residual oil was dissolved by circulating MEK through the channels. The MEK was flushed out using compressed air. All oil must be removed from the mold. Any oil remaining in the mold will contaminate the electroless nickel plating baths used for plating the mold. The exterior mold surface was wiped down with MEK. The cure cycle subsequent steps were performed using the same procedures used for oven heated molds.

Fig. 5 is a diagram of a graphical representation of a generalized coating schedule. In cycle A, evaporation of solvent results in a rigid coating which will not sag during subsequent coating applications. Cycle B results in a hard, monolithic coating which can be sanded to specifications and will remain dimensionally stable through the cure cycle.

Interfacial adhesion between the coated insulator and the steel coupons was measured using a Sebastian Adherence Tester (Quad Group, Seattle WA) where a heat curable epoxy coated pin with a surface area of 6mm² is adhered to the insulator surface. After curing, the pin is pulled perpendicular to the sample and the force required to cause debonding measured. The adhesive limit for the epoxy/insulator interface was approximately 8000 psi.

Thermal conductivity of a cured Whitford Type A resin filled with 30% by volume barium sulfate and cured at 550°F was measured using a Holometrics, Inc. TCA-1000. A 2'' diameter disk was heated over the temperature range. The thermal conductivity was measured at various temperatures.

The present invention employs a two-solvent system which is preferred in the spray application of quality 3-dimensional molds. Each solvent serves a different purpose and is volatilized in separate efforts. The lower boiling point (T_{B}) solvent, i.e., MEK T_{B}= 175°F (80°C) serves several purposes. It is used as a thinner to reduce the resin viscosity to within the sprayable range, thus it acts as a carrier to transport the resin to the substrate. Upon contact with the substrate, almost all of the low T_{B} solvent evaporates immediately, increasing the resin viscosity sufficiently to prevent runs and sags, which would otherwise occur in a one solvent system. This is particularly important for the coating of 3-dimensional molds where the resin must simultaneously be coated onto surfaces ranging from horizontal to vertical. However, since the higher boiling point T_{B} solvent, i.e., NMP T_{B}= 396°F (202°C), is still present, the resin is not rigid. The surface tension of the material causes the resin to flow a small amount resulting in a smooth surface. This flow eliminates the undesirable effect known as orange peel, which is a surface texture that resembles the surface of an orange.

Additional work was done using a solvent system of 4-Heptanone and NMP. 4-Heptanone has a 215°F higher boiling point than MEK. The result is the ability to increase the substrate temperature for coating without causing undesired bubbles. All of the data reported below for Whitford material prepared as MEK/NMP blend.

To attain the final thickness of at least 0.010 inches, the coating should preferably be applied in layers of between 0.001 to 0.002 inches thick otherwise the coating flows excessively on vertical walls and the time needed for solvents to diffuse to the surface becomes very long. Each layer or pass must be heated to drive off enough solvent so the layer becomes rigid before the next application.

During resin application, it is desirable to volatilize the low T_{b} solvent as quickly as possible to prevent runs and puddling. This is done by increasing the substrate temperature during coating. However, if the substrate temperature, and hence the evaporation rate, is too high, the solvents will boil producing bubbles within the resin rather than diffusing to the surface. The size and occurrence of these bubbles increases as the temperature increases above T_{b} MEK. For this reason it is necessary to spray at substrate temperatures below 170°F, preferably at about 150°F. Below 150°F, the coating remains wet since the rate of MEK loss is low, and will sag from vertical surfaces.

Independent of the substrate temperature effects, clusters of bubbles are incorporated in each coating due to lack of full atomization from the gun. These bubbles probably contain N₂, the propellant. Elimination of these bubbles is only possible while the material is soft. A 10 minute hold at the spray temperature, 150°F, is sufficient time for the bubbles to break and the resin to reflow eliminating the defects. In addition, this time allows more of the solvents to volatilize, making the coating less sensitive to bubbling during the subsequent higher temperature cycle A. The thickness of the sprayed layer also affects the ability of the N₂ bubbles to rise to the surface and break before the viscosity increases to the point where they are permanently imbedded. For this reason the pass thickness should be limited to a maximum of about 0.0015 inches.

In experiments employing the oven method the coating was built at 0.0015 inches per pass, and the required pre-cure thickness of 0.013 inches was achieved in eight to nine passes. Each layer preferably should contain no more than about 15% volatiles when the next layer is applied. Otherwise, the coating will sag on the vertical walls of the mold. Therefore, after applying a layer and waiting 10 minutes, additional heating is required to ensure a sufficiently rigid layer before applying the next layer. This thermal ramp, cycle A (Fig. 5), heats the coating to a temperature where sufficient solvent volatility occurs before cooling to the spray temperature, 150°F, prior to the next coating application. It is not necessary for the entire mold to heat to this temperature, just the insulator layer and outer surface of the mold.

When the part was held at the spray temperature, 150°F, for 40 minutes between coats, the final product cracked across the surface. In addition to the cracks, the material contained enough residual solvent that sagging occurred at thicknesses greater than 0.005 inches. As the cycle A hold temperatures increases above 300°F, bubbles are created by NMP vaporizing faster than it can diffuse to the surface. For this reason, it is recommended that the maximum cycle A temperature be limited up to about 275°F.

The mold/insulator interface temperature mediates the rate of solvent diffusion from the coating. The time at the cycle A hold temperature varies according to the weight of the mold insert. Thus, it takes longer for the coating to reach the desired temperature on a larger part. The heat up rate is related to the ratio of surface area to mass. General guidelines have been developed to simplify the process and to minimize errors which would lead to coating failure. The following table shows the suggested temperatures and times for processing:

| Description | Weight | Time at 275°F, Cycle A hold temperature |
|---|---|---|
| Sample Coupon | 1 lb. | 30 minutes in oven |
| Mold Insert | 25 lb. | 90 minutes in oven |
| Mold Insert | 100 lbs. | 3 hours in oven |
| Mold Insert | > 100 lbs. | Oil Heated to 275°F Hold 90 minutes |

Following cycle A, the mold was again cooled to the spray temperature and the next layer applied. The coating and cycle A combination were repeated until the insulator was at least 0.013 inches thick. At this point, the insulator contained approximately 10 to 14% volatiles, almost all of which was NMP as measured by TGA, as determined by mass spectroscopic analysis of the volatiles evolved during heating. Typical TGA data from a sample which was coated to a thickness of 0.010 inches and processed through cycle A are shown in Fig. 6. In all samples (oven and oil heated), the weight loss occurred around the NMP boiling point, 202°C (396°F).

According to the prior art method, the thermal mass of molds larger than 100 pounds can correlate to many hours in the oven during cycle A. The time required to heat a large mold insert (> 100 lbs.) to 275°F, the cycle A hold temperature, is at least five hours in the oven. Since the cycle A is repeated eight times, the processing time approaches one week working two shifts. However, according to the invention heated oil is pumped through the cooling channels to thermal cycle the mold. The heat conduction from the oil to the mold is significantly faster than from air, therefore, the cycle time can be reduced significantly using oil. In a study using a 400 pound mold, it was consistently oil heated from 150°F to 275°F in 40 minutes resulting in a coating cycle and cycle A time of 1 hour 45 minutes combined. Thus, the oven heating cycle time which is predicted to be more than six hours, is three times longer than oil heating.

The coating process of oil heating is essentially the same as the one used with oven heating with the following exception. The maximum pass thickness during coating is 0.001 inches. Greater pass thicknesses resulted in bubbles similar to those seen in the oven heating case of pass thickness greater than 0.0015 inches. After the insulator was fully built, the coating was processed using the following procedures described below.

Prior to the curing step, the coating thickness should be uniform (± 0.001 inches variation) across the insert. The coating was thus sanded to within tolerances before curing for two reasons. First, the material is easy to sand prior to cure and second, a top coat of nickel powder, a nickel plating primer, in a polymer solution is sprayed on the insulator following full build. Following application of the top coat, sanding is not a practical expedient. Also to maximize adhesion between the top coat and insulator, they should be cured together. However, the pre-curing solvent content of ~12 wt% translates to as much as a 30% thickness reduction after curing. This reduction in thickness causes variations greater than ± 0.001 inches, even though the insert was within tolerances prior to curing. Once the full thickness of the insulator was achieved, the second heating cycle was added to the process to eliminate as much solvent as possible while only partially curing the resin thereby achieving most of the shrinkage and allowing easy sanding.

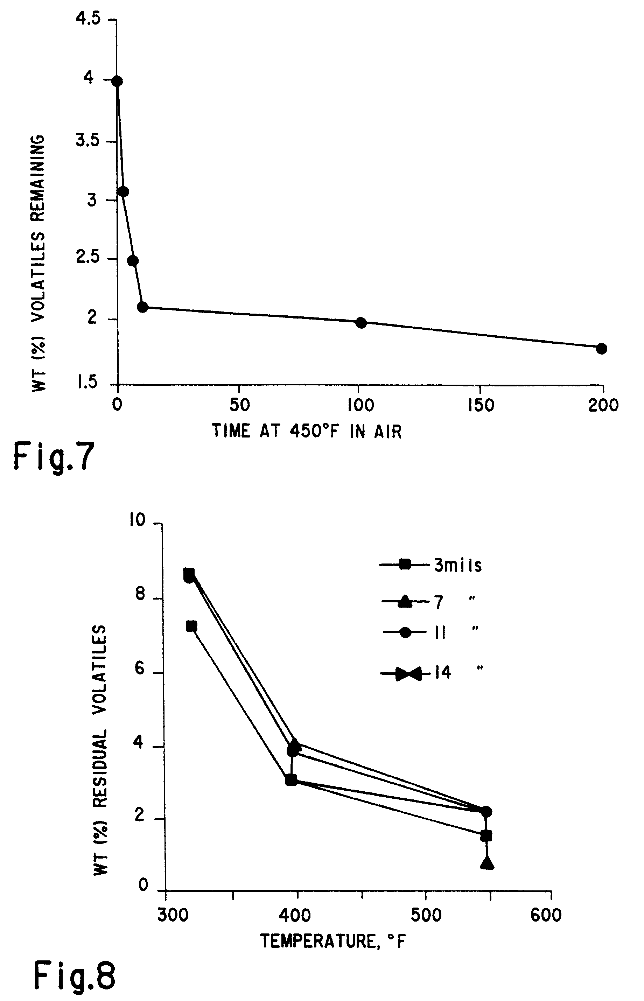

As noted previously, most of the residual volatiles in the insulator are NMP. The most efficient way to remove the solvent is to heat the mold insert slowly above the NMP boiling point. An oven ramp rate of 25°F per hour was found to be the fastest rate without compromising coating quality. More rapid heat-up rates result in the resin temperature exceeding the NMP boiling point while a significant NMP concentration still exists within the resin leading to foaming of the resin. Foaming looks like a sponge in cross section and destroys the compressive strength of the insulator. The foam is created by a significant increase in NMP vapor pressure within the insulator while the resin is relatively uncured and therefore able to deform. To compensate, the sample is heated slowly enough to allow the residual volatiles to diffuse from the insulator. Therefore, the part was ramped at a rate up to about 25°F per hour to 450°F, held for two hours, and cooled for sanding. The decrease in volatiles content during a hold at 450°F is shown in Fig. 7. The solvent content was found to be relatively independent of thickness, but dependant on heat treatment (see Fig. 8). After cycle B, the coating typically contains about 3 to 4 wt% volatiles. At this low solvent content, the coating thickness does not change significantly upon further heating, therefore, the part can be sanded or machined to specifications. Once the part was sanded, it was top coated and processed through cycles A and B (with a 10 hour hold) to prepare the top coat for curing.

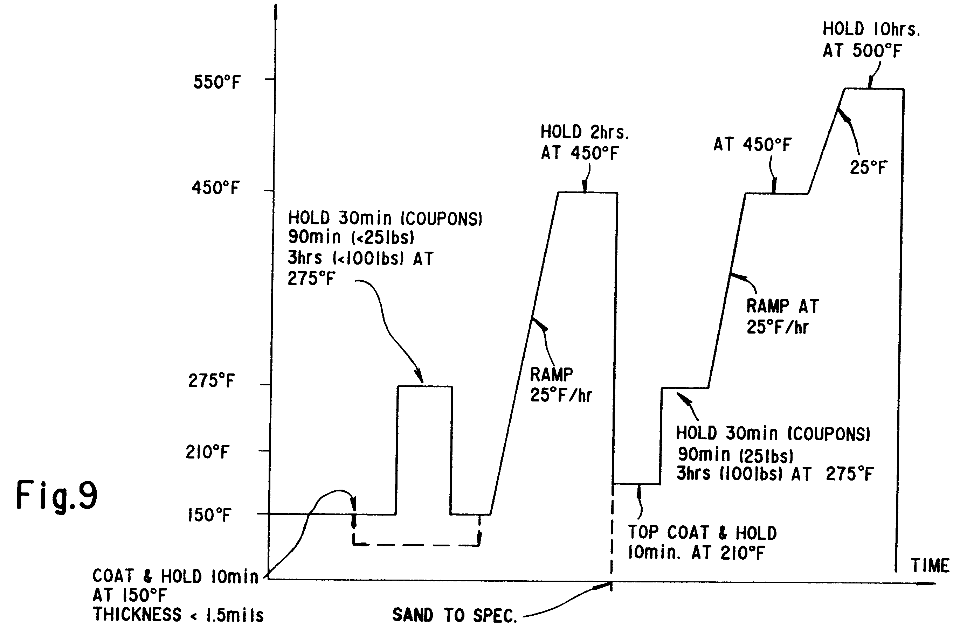

The final step improves rigidity and strength of the resin by chain growth and cross link by cyclization to the imide form. The structure shown above illustrates the generalized structures from the amic acid and amide-imide. It was found that a two-hour hold at 450°F, then a ramp at 25°F per hour to the final resin cure temperature, for example, 500°F, and a two-hour hold and then cool to room temperature was sufficient to achieve the necessary rigidity while reducing the volatiles content to an acceptable 1.5 wt%. It has been found that this low level of residual solvent does not compromise the integrity of the composite during molding. Fig. 9 shows a preferred coating and curing schedule.

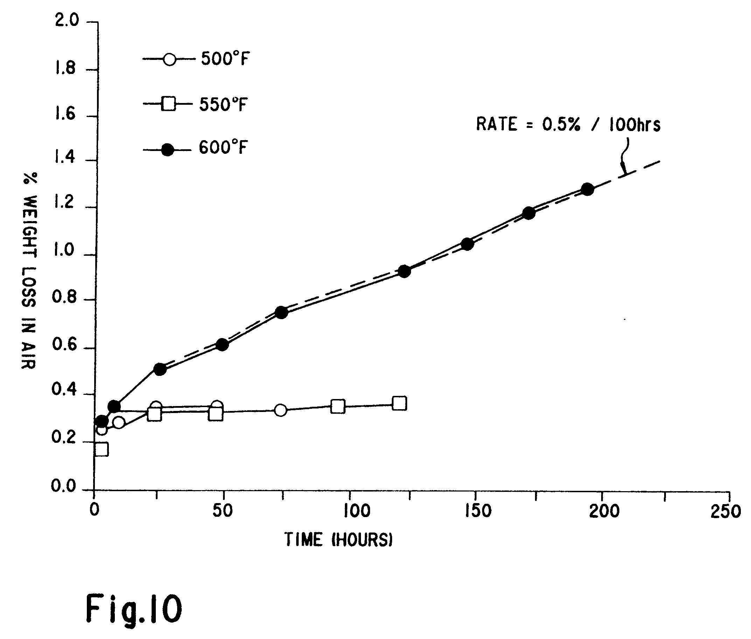

The interfacial adhesion and volatiles content were found to remain stable, even after 100 hours at 450°F in air, simulating one year of mold operation. A study of weight loss in air at various temperatures was conducted. The Whitford polyamide-imide was found to be stable at 550°F. At 600°F, a steady weight loss of 0.5% per 100 hours was observed (see Fig. 10)

Adhesion between the cured insulator and the surface of both a 440 stainless and a P20 steel was measured as a function of steel surface treatment. Table 1 shows the adhesion results obtained following 550°F curing of the resin. In all cases, except for the non-abraded P20 steel, failure occurred at the glue/insulator interface.

**TABLE 1**

| Substrate | Adhesion (psi) | Mechanism |
|---|---|---|
| **Stainless Steel** | | |
| Smooth | 8160 to 9280 | glue |
| 6µ'' roughness | 8140 to 9140 | glue |
| 150µ'' roughness | 7880 to 9240 | glue |

| **P20 Steel** | | |
|---|---|---|
| Smooth | 1390 to 1870 | steel surface |
| 6µ'' roughness | 6990 to 8560 | glue |
| 150µ'' roughness | 7850 to 8840 | glue |

The thermal conductivity was measured between 61°C and 299°C following 550°F curing of the resin (see Table 2). The requirement that the thermal conductivity of the insulator be less than the molten plastic is satisfied.

**TABLE 2**

| Temperature °C | Thermal Conductivity W/M· K |
|---|---|
| 61 | 0.213 |
| 99 | 0.240 |
| 150 | 0.264 |
| 200 | 0.394 |
| 250 | 0.433 |
| 299 | 0.433 |

The coatings prepared according to the invention retain a lower percentage of residual volatiles than conventional coatings as determined by a weight loss test. The conventional coating heated in air at 500°F for 2 hours showed a weight loss in a range from about 1% to about 1.5% comprising a combination of residual solvent and moisture. Coatings prepared according to the invention heated to 500°F for 2 hours had a weight loss in a range between about 0.8 g/o about 1.2%. The lower weight loss indicates that the coatings of the invention have less residual volatiles.

Various thermoplastic materials may be employed with the molds prepared according to the invention to produce finished products. Such plastics include polyamide materials sold under the trade designation "Nylon 6" or "Nylon 12" or "Nylon 6,6"; and other polymers such as polyesters, such as poly (butylene terephthalate) (PBT), poly (ethylene terephthalate) (PET), and PBT with soft ether linkages formed of polycarbonate and methylene, polyether ketones, polyetherimides, polylactams, polypropylenes, polyethylenes, polystyrene, styrene acrylonitrile, acrylonitrile butadiene terpolymers, polyphenylene oxide (PPO)/polystyrene and PPO/nylon and high impact styrenes filled or unfilled and blends thereof. Materials particularly suited for use in the invention, because of their versatility, strength and appearance include filled or unfilled polycarbonates, polyesters, polyphenylene oxide, acrylonitrile butidiene styrene (ABS), polyimide and polymeric combinations of such materials.

In addition to the foregoing, the following patents, the teachings of which are incorporated herein by reference disclose materials particularly useful for molding optical media such as optical disks and compact disks, and business machine parts which require optimum surface properties: Miller, U.S. Patent Nos. 4,774,315 and 4,788,275; Okamoto, U.S. Patent Nos. 4,997,903, Okamuto et al., U.S. Patent Nos. 4,977,233 and 4,902,735; Hasuo et al., 4,734,488; Myiauchi, U.S. Patent No. 4,670,479 and Japanese Patent J62207-358-A. These references disclose various materials having an average molecular weight within the range from about 10,000 and about 18,000 suitable for the molding applications herein discussed as well as other applications of interest to those skilled in the art.

Another aspect of the invention is directed to a method for making molds having an insulated mold surface coating and in particular, a method for making relatively heavy molds having a mass of about 100 lbs. or more. The method also relates to making molds which receive a coating material carried in a volatile solvent which are internally heated during coating and subsequent drying and curing steps to drive off the solvent carrier. The method allows the deposition of relatively thick coatings greater than 10-15 mils as is currently available. The method also prevents skin formation on the free surface of the coating prior to full cure or substantially full removal of solvent to a level of about 50% less than conventionally formed coatings. The invention also provides a method whereby the time required to apply such a coatings is reduced by about two-thirds in conventional methods.

The method for making molds comprises coating the mold with a heat curable material dissolved in a volatile solvent; and heating the mold with an internal heat source to establish a thermal gradient from inside the coating to a free surface thereof at a temperature just below the boiling point of the solvent to drive the solvent out of the coating without premature skin formation on the free surface and without trapping gases in said coating prior to substantially removing said solvent. The method further comprises the steps repeating the prior steps of coating and internally heating the mold with subsequent layers of selected amounts of the coating material until a desired thickness of the coating is achieved, and thereafter heating the mold above the boiling point of the solvent to post-cure the coating.

In the method according to the invention the solvent is preferably a two-component system comprising a first relatively low boiling point solvent and a second relatively high boiling point solvent, and the initial heating step is carried out at a temperature below the boiling point of the low boiling point solvent for a time sufficient to drive off the volatiles from the coating. The heating step further comprises heating the mold thereafter to a temperature just below the boiling point of the high boiling point material for a time sufficient to drive off the high boiling point volatiles from the coating.

In another embodiment the invention comprises a method for applying heat curable insulating coatings onto relatively massive molds by applying the coating onto the mold and heating the mold with an internal heat source to establish a thermal gradient from inside the coating to the free surface thereof whereby volatiles evolve from the solvent out of the coating without forming permanent voids in the form of trapped volatiles in said coating.

The present invention is also directed to the use of a mold as described herein for making molded thermoplastic articles. In particular, the mold may be employed in an injection molding or injection compression molding process where molten thermoplastic material is injected into a mold cavity. The molten material spreads throughout the cavity and is held therein for a time sufficient to cool below the glass transition temperature after which the molded article is ejected. In compression/injection molding, the molten thermoplastic material is compressed after the injection step. The invention results in molded articles having less severe and more uniform birefringence, less stress, a smoother surface finish and better optical properties.

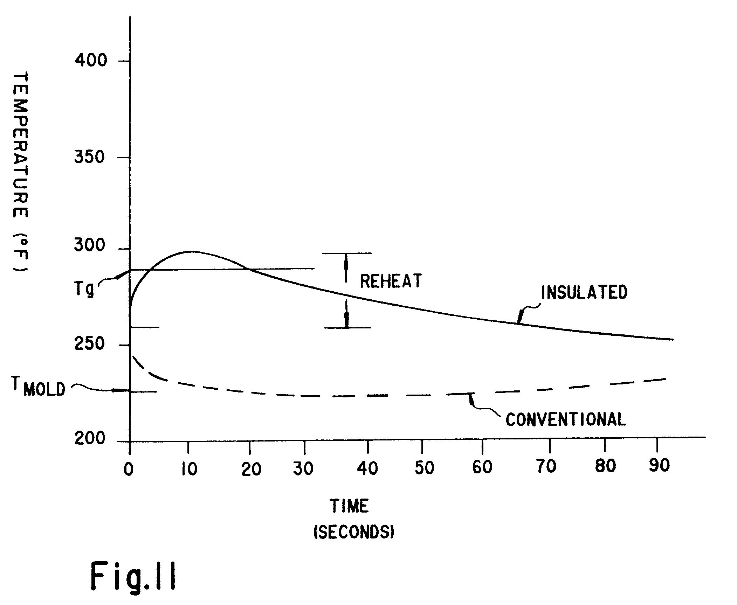

Fig. 11 schematically shows the transient temperature response of the surface temperature of an article molded in accordance with the teachings of the present invention, in comparison to the temperature profile of an article manufactured by conventional processes. In conventional molding represented by the dotted line the thermoplastic material at time t=0 initially comes in contact with the mold surface. As can be seen, the thermoplastic material in conventional apparatus, without insulation, is immediately cooled below the glass transition temperature T_{g}. Such rapid cooling can cause rough surfaces in the finished article. On the other hand, with the insulated mold structure of the present invention, the thermoplastic material can be initially quenched by contact with the relatively cool skin of the mold and may temporally fall below the glass temperature T_{g}. However, the surface becomes reheated by the internal temperature of the hot molten thermoplastic material. Thus, the surface temperature increases to above the glass transition temperature, and the resin fills the mold thereby avoiding rough surfaces.

While there has been described what are at present considered to be the preferred embodiments of the present invention, it will be apparent to those skilled in the art that various changes and modifications may be made therein without departing from the invention, and it is intended in the appended claims to cover such changes and modifications as fall within the spirit and scope of the invention.

## Claims

**1.** A method for molding thermoplastic materials comprising charging a plastic into a mold having a structure comprising:
a substrate having a high thermal conductivity; and
a layer of relatively high temperature-resistant material having a low thermal conductivity disposed on the substrate.

**2.** The method of claim 1 wherein the substrate has openings for receiving a supply of heated fluid and the temperature-resistant material is a coating deposited as a heat curable solution, and the heated fluid transfers heat to the substrate which activates the solution proximate the substrate, whereby cure occurs internally of the coating towards a free surface thereof, for driving volatiles from the coating without premature skin formation thereon prior to evolution of the volatiles.

**3.** The method according to claim 1, wherein the plastic is a material selected from the group consisting of polyamides, polyester, polyethylene terepthalate (PET), polybutadiene terepthalate (PBT), PBT with soft linkages formed of polycarbonate and methylene, polyether ketones, polyetherimides, polylactams, polypropylenes, polyethylenes, polystyrene, styrene acrylonitride, acrylonitrile butadiene terpolymers, polypropylene oxide (PPO)/polystyrenes, PPO/nylons and high impact polystyrene filled or unfilled and blends thereof.

**4.** The method according to claim 1, wherein the plastic is a material selected from the group consisting of filled or unfilled polycarbonates, polyesters, polyphenylene oxide, acrylonitrile butadiene styrene (ABS), styrene acrylonitrile, polyimide, blends and polymeric combinations thereof.

**5.** A method for making a mold having as its sole source of heating an internal heat source close to the mold surface comprising:
coating the mold with a heat curable material dissolved in a volatile solvent;
heating the mold with the internal heat source to establish a thermal gradient from inside the coating to a free surface thereof at a temperature just below the boiling point of the solvent to drive the solvent out of the coating without premature skin formation and without trapping volatiles in said coating.

**6.** The method of claim 5 further comprising the steps of:
repeating the prior steps of coating and heating the mold with selected amounts of the coating material until a desired thickness of the coating is achieved; and
thereafter heating the mold above the boiling point of the solvent to post-cure the coating.

**7.** The method of claim 5 wherein the solvent is a two-component system comprising a first relatively low boiling point solvent and a second relatively high boiling point solvent, and the initial heating step occurs at a temperature below the boiling point of the low boiling point solvent for a time sufficient to drive off the volatiles from the coating, and the heating step further comprises heating the mold thereafter to a temperature just below the boiling point of the high boiling point material to drive off the high boiling point volatiles from the coating.

**8.** The method of claim 5 wherein the solvent is MEK and NMP.

**9.** The method of claim 5 wherein the coating is a polyamic acid.

**10.** The method of claim 5 wherein the coating is a polyimide or polyamideimide capable of being sprayed and condensation cured in the presence of heat.

**11.** The method of claim 5 wherein the thermoplastic material is selected from the group consisting of Nylon 6, Nylon 12, Nylon 6,6; polyesters, poly (butylene terephthalate) (PBT), poly (ethylene terephthalate) (PET), and PBT with soft ether linkages formed of polycarbonate and methylene, polyether ketones, polyetherimides, polylactams, polypropylenes, polyethylenes, polystyrene, styrene acrylonitrile, acrylonitrile butadiene terpolymers, polyphenylene oxide (PPO)/polystyrene and PPO/nylon and high impact styrenes filled or unfilled and blends thereof.

**12.** The method of claim 5 wherein the thermoplastic material is selected from the group consisting of filled or unfilled polycarbonates, polyesters, polyphenylene oxide, acrylonitrile butidiene styrene (ABS), polyimide and polymeric combinations of such materials.

**13.** A mold manufactured in accordance with the method of claim 5.

**14.** An article manufactured with the mold of claim 5.

**15.** An article manufactured with the mold made in accordance with the method of claim 5.

**16.** A method for coating a relatively massive mold with an insulating coating comprising the steps of:
coating the mold with a heat curable material dissolved in a volatile solvent;
heating the mold with the internal heat source to establish a thermal gradient from inside the coating to a free surface thereof to a temperature just below the boiling point of the solvent to drive the solvent out of the coating without the premature formation of a skin on the free surface prior to the evolution of substantially all the volatiles in said coating.

**17.** The method according to claim 16, wherein the plastic is a material selected from the group consisting of polyamides, polyester, polyethylene terepthalate (PET), polybutadiene terepthalate (PBT), PBT with soft linkages formed of polycarbonate and methylene, polyether ketones, polyetherimides, polylactams, polypropylenes, polyethylenes, polystyrene, styrene acrylonitride, acrylonitrile butadiene terpolymers, polypropylene oxide (PPO)/polystyrenes, PPO/nylons and high impact polystyrene filled or unfilled and blends thereof.

**18.** The method according to claim 16, wherein the plastic is a material selected from the group consisting of filled or unfilled polycarbonates, polyesters, polyphenylene oxide, acrylonitrile butadiene styrene (ABS), styrene acrylonitrile, polyimide, blends and polymeric combinations thereof.

**19.** A method for making a mold having a relatively thick insulating coating comprising the steps of:
coating the mold with a heat curable material dissolved in a volatile solvent;
heating the mold with the internal heat source to establish a thermal gradient inside the coating to a free surface thereof at a temperature just below the boiling point of the solvent to drive the solvent out of the coating without premature skin formation on the free surface and without trapping evolved solvents in said coating.

**20.** The method of claim 19 further comprising the steps of:
repeating the prior steps of coating and heating the mold with selected amounts of the coating material until a relatively thick coating having a thickness greater than 15 mils is achieved; and
thereafter heating the mold above the boiling point of the solvent to post-cure the coating.

**21.** A mold for thermoplastic materials comprising:
a substrate having a high thermal conductivity; and
an insulating layer of relatively low water temperature-resistant material having a low thermal conductivity disposed on the substrate.

**22.** The mold of claim 21 wherein the substrate has openings for receiving a supply of heated fluid and the temperature-resistant material is coating deposited as a heat curable solution/suspension, and the heated fluid transfers heat to the substrate which activates the solution/suspension proximate the substrate, whereby cure occurs internally of the coating towards a free surface thereof, for driving volatiles from the coating without causing void formation therein or damage to the free surface due to premature curing thereof prior to evolution of the volatiles.

**23.** The mold according to claim 21, wherein the plastic is a material selected from the group consisting of polyamides, polyester, polyethylene terepthalate (PET), polybutadiene terepthalate (PBT), PBT with soft linkages formed of polycarbonate and methylene, polyether ketones, polyetherimides, polylactams, polypropylenes, polyethylenes, polystyrene, styrene acrylonitride, acrylonitrile butadiene terpolymers, polypropylene oxide (PPO)/polystyrenes, PPO/nylons and high impact polystyrene filled or unfilled and blends thereof.

**24.** The mold according to claim 21, wherein the plastic is a material selected from the group consisting of filled or unfilled polycarbonates, polyesters, polyphenylene oxide, acrylonitrile butadiene styrene (ABS), styrene acrylonitrile, polyimide, blends and polymeric combinations thereof.

**24.** A mold having as its sole source of heating an internal heat source close to the mold surface comprising:
a heat curable material dissolved in a volatile solvent disposed on the mold, said coating being substantilly volatile free as a result of internal heating causing a thermal gradient inside the coating to a free surface thereof at a temperature just below the boiling point of the solvent whereby the solvent is driven out of the coating without premature skin formation and without trapped volatiles in said coating.

**25.** A relatively massive mold comprising: a heat curable material dissolved in a volatile solvent disposed on the mold, said coating being substantilly volatile free as a result of internal heating causing a thermal gradient inside the coating to a free surface thereof at a temperature just below the boiling point of the solvent whereby the solvent is driven out of the coating without premature skin formation and without trapped volatiles in said coating.
